# EUROPÄISCHE PATENTSCHRIFT

(11) **EP 1 625 450 B1**
(45) Veröffentlichungstag und Bekanntmachung des Hinweises auf die Patenterteilung: **15.09.2010**
(21) Anmeldenummer: 04728095.3
(22) Anmeldetag: 17.04.2004
(51) Int. Cl.: G05B 19/4093, B23C 3/18, B23C 5/10

(54) **VERFAHREN ZUM FRÄSEN VON FREIFORMFLÄCHEN**
METHOD FOR CUTTING FREEFORM SURFACES
PROCEDE POUR FRAISER DES SURFACES A FORME LIBRE

(30) Priorität: 17.05.2003 DE 10322342
(43) Veröffentlichungstag der Anmeldung: 15.02.2006
(73) Patentinhaber: MTU Aero Engines GmbH, 80995 München (DE)
(72) Erfinder: GLÄSSER, Arndt, 85221 Dachau (DE); HEINRICH, Stefan, 82276 Adelshofen (DE)
(86) Internationale Anmeldenummer: PCT/DE2004/000809
(87) Internationale Veröffentlichungsnummer: WO 2004/104715

(56) Entgegenhaltungen:
- EP-A- 1 285 714
- EP-A2- 0 453 627
- DE-A- 19 607 192
- DE-A1-102007 010 163
- GB-A- 2 354 728
- JP-A- 2007 229 849
- US-A- 4 666 352
- US-A- 4 968 195
- US-B1- 6 684 742
- PATENT ABSTRACTS OF JAPAN Bd. 1999, Nr. 11, 30. September 1999 (1999-09-30) & JP 11 156620 A (HITACHI TOOL ENG LTD), 15. Juni 1999 (1999-06-15)
- PATENT ABSTRACTS OF JAPAN Bd. 1999, Nr. 11, 30. September 1999 (1999-09-30) & JP 11 156621 A (HITACHI TOOL ENG LTD), 15. Juni 1999 (1999-06-15)
- KAI T ET AL: "Offsetting surface boundaries and 3-axis gouge-free surface machining" COMPUTER AIDED DESIGN, ELSEVIER PUBLISHERS BV., BARKING, GB, Bd. 27, Nr. 12, 1. Dezember 1995 (1995-12-01), Seiten 915-927, XP004022745 ISSN: 0010-4485
- YUNCHING HUANG ET AL: "NON-CONSTANT PARAMETER NC TOOL PATH GENERATION ON SCULPTURED SURFACES" INTERNATIONAL JOURNAL OF ADVANCED MANUFACTURING TECHNOLOGY, SPRINGER VERLAG, LONDON, GB, Bd. 9, Nr. 5, 1994, Seiten 281-290, XP000570562 ISSN: 0268-3768
- XIONG-WEI L: "Five-axis NC cylindrical milling of sculptured surfaces" COMPUTER AIDED DESIGN, ELSEVIER PUBLISHERS BV., BARKING, GB, Bd. 27, Nr. 12, 1. Dezember 1995 (1995-12-01), Seiten 887-894, XP004022742 ISSN: 0010-4485

## Beschreibung

Die Erfindung betrifft ein Verfahren zum Fräsen von Freiformflächen nach dem Oberbegriff des Patentanspruchs 1.

Ein solches Verfahren ist beispielweise aus JP 111 566 21 bekannt.

Die hier vorliegende Erfindung betrifft das Gebiet der Frästechnik, insbesondere das HSC (High Speed Cutting)-Fräsen, welches auch als HPC (High Performance Cutting)-Fräsen bezeichnet wird.

Für das Fräsen von Freiformflächen werden nach dem Stand der Technik sogenannte Kugelfräser eingesetzt. Derartige Kugelfräser verfügen über einen Werkzeugschaft und einen sich an den Werkzeugschaft anschließenden Werkzeugkopf, wobei beim Kugelfräser ein Radius des Werkzeugkopfs einem Radius des Werkzeugschafts entspricht. Der Werkzeugkopf steht demnach seitlich nicht über eine äußere Mantelfläche des Werkzeugschafts vor.

In der Druckschrift von Xiong-Wei "Five-Axis NC cylindrical milling of sculptured surfaces" (Computer Aided Design, Vol 27, 12.12.1995) werden theoretische Grundlagen unter der Verwendung von differential und analytischer Geometrie für die Pfaderzeugung eines 5-Achsfräser mit einer zylindrischen Form zum Fräsen von Freiformflächen offenbart.

In der Druckschrift JP 111 566 21 ist ein Fräskopf offenbart, dass seitlich nicht über eine äußere Mantelfläche des Werkzeugschafts hervorsteht.

Zur Minimierung einer sich beim Fräsen einstellenden, unerwünschten Restzeilung ergeben sich bei Verwendung eines Kugelfräsers Beschränkungen hinsichtlich des einzuhaltenden Zeilenabstands zwischen den Fräsbahnen des Fräswerkzeugs. Hierdurch ergibt sich eine relativ große Anzahl von erforderlichen Fräsbahnen, wodurch die zum Fräsen benötigte Zeit bestimmt wird. Unter dem Gesichtspunkt des High Speed Cutting bzw. High Performance Cutting sind jedoch geringe Fräszeiten wünschenswert.

Hiervon ausgehend liegt der vorliegenden Erfindung das Problem zu Grunde, ein neuartiges Verfahren zum Fräsen von Freiformflächen vorzuschlagen.

Dieses Problem wird dadurch gelöst, dass das eingangs genannte Verfahren zum Fräsen von Freiformflächen durch die Merkmale des Patentanspruchs 1 weitergebildet ist.

Ein Werkstück wird von einem Fräswerkzeug derart gefräst, dass sich eine gewünschte Freiformfläche ergibt. Das Fräswerkzeug wird zum Fräsen entlang mindestens einer definierten Fräsbahn relativ zum Werkstück bewegt. Erfindungsgemäß wird ein Fräswerkzeug (sogenannter Sonderfräser) verwendet, dessen Werkzeugkopf einen größeren Radius aufweist als ein Werkzeugschaft des Fräswerkzeugs, ohne dass jedoch der Werkzeugkopf seitlich über eine äußere Mantelfläche des Werkzeugschafts vorsteht. Dies hat den Vorteil, dass sich beim Fräsen eine geringe Restzeilung ergibt. Der Zeilenabstand beim Fräsen kann demzufolge erhöht und die zum Fräsen benötigte Zeit verringert werden.

Nach der Erfindung werden unter Verwendung eines Kugelfräsers, dessen Radius des Werkzeugkopfs dem Radius des Werkzeugschafts entspricht, erste Fräsbahnen erzeugt. Aus diesen ersten Fräsbahnen werden zweite Fräsbahnen für das zu verwendende Fräswerkzeug, dessen Werkzeugkopf einen größeren Radius aufweist als ein Werkzeugschaft desselben, generiert. Dies erlaubt eine besonders einfache und schnelle Generierung der Fräsbahnen für das zu verwendende Fräswerkzeug. Diese vorteilhafte Ausgestaltung kommt dann zum Einsatz, wenn das verwendete CAM-System keine Sonderfräser unterstützt.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: ein Fräswerkzeug nach dem Stand der Technik in Seitenansicht; und
- Fig. 2:: ein erfindungsgemäßes Fräswerkzeug in Seitenansicht.

Nachfolgend wird die hier vorliegende Erfindung unter Bezugnahme auf die Figuren in größerem Detail erläutert. Bevor jedoch die Details des erfindungsgemäßen Verfahrens sowie des erfindungsgemäßen Fräswerkzeugs dargestellt werden, sollen nachfolgend einige Begriffe definiert werden, auf die später Bezug genommen wird.

Bei der Fräsbearbeitung eines zu bearbeitenden Werkstücks soll sich an der Oberfläche des Werkstücks eine gewünschte dreidimensionale Geometrie einstellen. Diese gewünschte dreidimensionale Geometrie an der Oberfläche des Werkstücks wird auch als Freiformfläche bezeichnet.

Die Fräsbearbeitung des zu bearbeitenden Werkstücks erfolgt mithilfe eines Fräswerkzeugs, einem sogenannten Fräser. Zur Bearbeitung des Werkstücks wird das Fräswerkzeug bzw. der Fräser relativ zum Werkstück bewegt. Die Bewegung des Fräswerkzeugs bzw. Fräsers relativ zum Werkstück wird durch sogenannte Werkzeugkoordinaten beschrieben, wobei die Werkzeugkoordinaten die Position eines Werkzeugbezugspunkts definieren. Die Bewegung des Werkzeugbezugspunkts bei der Fräsbearbeitung des Werkstücks bezeichnet man als Werkzeugbahn bzw. Fräsbahn.

Das Fräswerkzeug verfügt über einen Werkzeugschaft sowie einen sich an den Werkzeugschaft anschließenden Werkzeugkopf. Der Werkzeugkopf kommt beim Fräsen mit dem zu bearbeitenden Werkstück in Kontakt. Die Eigenschaften eines Fräswerkzeugs werden durch mehrere geometrische Parameter bestimmt, die in der Regel in einem Werkzeugkoordinatensystem angegeben werden. Ein Ursprung dieses Werkzeugkoordinatensystems wird von dem Werkzeugbezugspunkt gebildet, in welchem sich eine Achse bzw. Symmetrieachse des Werkzeugschafts mit einem Ende bzw. einer Spitze des Werkzeugkopfs schneidet. Ausgehend von diesem Ursprung des Werkzeugkoordinatensystems verläuft eine erste Achse desselben in Richtung der Symmetrieachse des Werkzeugschafts. Die übrigen Achsen des Werkzeugkoordinatensystems verlaufen jeweils senkrecht hierzu.

Bei den Parametern, durch welche die Eigenschaften eines Fräswerkzeugs im Werkzeugkoordinatensystem definiert werden, handelt es sich insbesondere um einen Durchmesser bzw. Radius des Werkzeugschafts, einen Durchmesser bzw. Radius des Werkzeugkopfs, eine horizontale Koordinate eines Radiusmittelpunkts des Werkzeugkopfs sowie eine vertikale Koordinate des Radiusmittelpunkts des Werkzeugkopfs. Gegebenenfalls kommen noch Parameter wie Winkel zwischen Liniensegmenten und horizontal bzw. vertikal verlaufenden Achsen des Fräswerkzeugs hinzu., wobei die vertikale Achse in Richtung der Werkzeugachse und die horizontale Achse senkrecht zu dieser Werkzeugachse des Fräswerkzeugs verläuft.

Die Fräsbearbeitung eines Werkstücks zur Ausbildung einer definierten dreidimensionalen Freiformfläche erfolgt mithilfe eines sogenannten Fünf-Achsfräsens. Beim Fünf-Achsfräsen kann das Fräswerkzeug in fünf Achsen relativ zum zu bearbeitenden Werkstück bewegt werden. Drei Achsen dienen der linearen Relativbewegung des Fräswerkzeugs relativ zum Werkstück, so dass jeder Punkt im Raum angefahren werden kann. Zusätzlich zu dieser linearen Bewegung entlang der sogenannten Linearachsen ist das Fräswerkzeug zur Realisierung von Hinterschneidungen auch um eine Schwenkachse sowie eine Kippachse bewegbar. Entlang der Schwenkachse sowie der Kippachse werden rotatorische Bewegungen des Fräswerkzeugs ermöglicht. Hierdurch ist es möglich, dass alle Punkte im Raum ohne Kollision angefahren werden können. Die Schwenkachse sowie die Kippachse werden häufig auch allgemein mit dem Begriff Rundachsen bezeichnet.

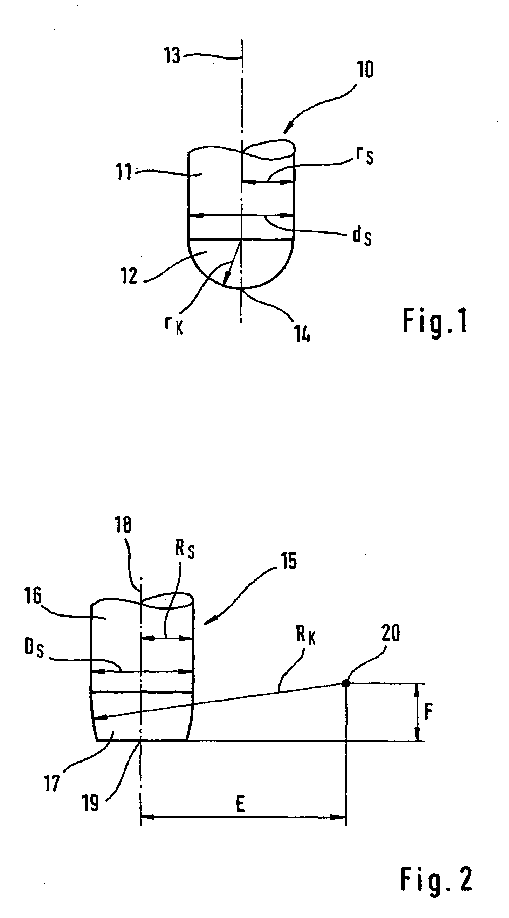

Fig. 1 zeigt ein Fräswerkzeug 10, wie es aus dem Stand der Technik bekannt ist und wie es nach dem Stand der Technik zum Fräsen von Freiformflächen an Werkstücken verwendet wird.

Das Fräswerkzeug 10 gemäß Fig. 1 verfügt über einen Werkzeugschaft 11 sowie einen sich an den Werkzeugschaft 11 anschließenden Werkzeugkopf 12. Der Werkzeugschaft 11 verfügt über einen Durchmesser d_{S} sowie einen Radius r_{S}, wobei gilt: r_{S}=d_{S}/2. Der Werkzeugkopf 12 verfügt über einen Radius r_{K}, wobei beim Fräswerkzeug gemäß Fig. 1 der Radius r_{K} des Werkzeugkopfs 12 dem Radius r_{S} des Werkzeugschafts 11 entspricht. Demzufolge gilt für das Fräswerkzeug 10 der Fig. 1: r_{K}=r_{S}=d_{S}/2. Ein solches Fräswerkzeug bezeichnet man auch als Kugelfräser. Wie Fig. 1 entnommen werden kann, steht der Werkzeugkopf 12 seitlich nicht über eine äußere Mantelfläche des Werkzeugschafts 11 vor.

Weiterhin zeigt Fig. 1 eine Achse 13 des Werkzeugschafts 11. Die Achse 13 des Werkzeugschafts 11 schneidet ein Ende bzw. eine Spitze des Werkzeugkopfs 12 in einem Punkt 14, wobei der Punkt 14 einen Ursprung für ein Werkzeugkoordinatensystem bildet.

Fig. 2 zeigt ein Fräswerkzeug 15. Das Fräswerkzeug 15 verfügt wiederum über einen Werkzeugschaft 16 und über einen sich an den Werkzeugschaft 16 anschließenden Werkzeugkopf 17. Weiterhin zeigt Fig. 2 wiederum eine Achse 18 bzw. Symmetrieachse des Werkzeugschafts 16 sowie einen Punkt 19, in welchem die Symmetrieachse 18 des Werkzeugschafts 16 ein Ende bzw. eine Spitze des Werkzeugkopfs 17 schneidet.

Es liegt nun im Sinne der hier vorliegenden Erfindung, dass ein Radius R_{K} des Werkzeugkopfs 17 größer ist als ein Radius R_{S} des Werkzeugschafts 16. Es gilt demnach: R_{K}>R_{S}. Auch beim Fräswerkzeug 15 steht der Werkzeugkopf 17 seitlich nicht über eine äußere Mantelfläche des Werkzeugschafts 16 vor.

Wie Fig. 2 entnommen werden kann, ist der Radius R_{K} des Werkzeugkopfs 17 deutlich größer als der Radius R_{S} des Werkzeugschafts 16, insbesondere größer als der doppelte Radius R_{S} des Werkzeugschafts 17 bzw. der Durchmesser D_{S} desselben. Es gilt also: R_{K}>>R_{S}.

So zeigt Fig. 2, dass ein Radiusmittelpunkt 20 des Werkzeugkopfs 17 des Fräswerkzeugs 15 nicht mehr wie beim Kugelfräser 10 gemäß Fig. 1 in einem Bereich des Werkzeugschafts liegt, sondern vielmehr außerhalb desselben. Die Position des Radiusmittelpunkts 20 wird durch eine horizontale Koordinate E und eine vertikale Koordinate F im Werkzeugkoordinatensystem bestimmt, wobei ein Ursprung dieses Werkzeugkoordinatensystems im Punkt 19 liegt.

An dieser Stelle sei angemerkt, dass der Radius R_{K} des Werkzeugkopfs 17 zwar in jedem Fall größer ist als der Radius R_{S} des Werkzeugschafts 16, jedoch kleiner als ein kleinster Krümmungsradius der zu fräsenden Freiformoberfläche. Hierdurch wird zum einen sichergestellt, dass sich eine geringe Restzeilung einstellt und damit der Zeilenabstand beim Fräsen vergrößert und die Fräszeit reduziert wird. Andererseits wird gewährleistet, dass eine kollisionsfreie Bearbeitung des Werkstücks möglich ist.

Das Fräswerkzeug 15 wird zur Herstellung von rotationssymmetrischen, scheibenförmigen oder ringförmigen Bauteilen verwendet. Bei diesen Bauteilen handelt es sich um Rotorscheiben mit integraler Beschaufelung, d.h. um sogenannte Bladed Disks, die auch als Blisks bezeichnet werden. Diese finden Verwendung in Flugzeugtriebwerken.

Es liegt im Sinne der hier vorliegenden Erfindung, ein neues erfindungsgemäßes Verfahren zum Fräsen von Freiformoberflächen an Werkstücken vorzuschlagen. Bei Fräsen von Freiformoberflächen wird so vorgegangen, dass ein Werkstück von dem Fräswerkzeug 15 derart gefräst wird, dass sich die gewünschte Freiformoberfläche ergibt. Das Fräswerkzeug 15 wird hierzu entlang mehrerer definierter Fräsbahnen relativ zum nichtdargestellten Werkstück bewegt. Erfindungsgemäß wird das Fräswerkzeug 15 gemäß Fig. 2 verwendet.

Nach der Erfindung werden dann, wenn ein verwendetes CAM-System Sonderfräser nicht unterstützt, in einem ersten Schritt unter Verwendung des Kugelfräsers 10 gemäß Fig. 1 erste Fräserbahnen erzeugt. Beim Kugelfräser 10 gemäß Fig. 1 entspricht der Radius r_{K} des Werkzeugkopfs 12 dem Radius r_{S} bzw. dem halben Durchmesser d_{S} des Werkzeugschafts 11. Derartige Kugelfräser 10 werden vom CAM-System, wie sie aus dem Stand der Technik bekannt sind, in jedem Fall unterstützt. Aus diesen ersten Fräsbahnen werden dann anschließend in einem zweiten Schritt zweite Fräsbahnen für das konkret zu verwendende Fräswerkzeug generiert, dessen Radius R_{K} des Werkzeugkopfs 17 größer ist als Radius R_{S} des Werkzeugschafts 16 desselben. Bei dem konkret zu verwendende Fräswerkzeug handelt es sich also um den Sonderfräser im Sinne der Erfindung.

Zur Ermittlung der zweiten Fräsbahnen für das zu verwendende Fräswerkzeug 15 aus den ersten Fräsbahnen, die unter Verwendung des Kugelfräsers 10 erzeugt wurden, werden Normalenvektoren der zu fräsenden Werkstückoberfläche erzeugt. Die ersten Fräsbahnen bestehen aus einer Vielzahl von Stützpunkten, wobei für jeden Stützpunkt der ersten Fräsbahnen ein Normalenvektor der zu fräsenden Werkstückoberfläche erzeugt wird. Zur Generierung der zweiten Fräsbahnen für das konkret zu verwendende Fräswerkzeug 15 werden die Stützpunkte der ersten Fräsbahnen relativ zu den korrespondierenden Normalenvektoren verschoben, nämlich in Richtung der Normalenvektoren. Dabei werden die Stützpunkte um die Differenz aus dem Radius r_{K} des Werkzeugkopfs 11 des Kugelfräsers 10 und dem Radius R_{K} des Werkzeugkopfs 17 des tatsächlich zu verwendenden Fräswerkzeugs 15 verschoben. Mit anderen Worten ausgedrückt werden demnach die Stützpunkte derart verschoben, dass ein Berührungspunkt des zu verwendenden Fräswerkzeugs 15 auf einer Oberfläche des zu fräsenden Werkstücks dem Berührungspunkt des Kugelfräsers 10 entspricht und sich immer im Bereich des Radius des Werkzeugkopfs des zu verwendenden Fräswerkzeugs 15 befindet.

Bei dieser Verschiebung der Stützpunkte werden die Koordinaten, welche die Position des Radiusmittelpunkts 20 des Werkzeugkopfs 17 des erfindungsgemäßen Fräswerkzeugs 15 beschreiben, berücksichtigt. Wie bereits oben erwähnt, liegt dieser Radiusmittelpunkt 20 des erfindungsgemäßen Fräswerkzeugs 15 nicht mehr auf Achse 18, sondern ist vielmehr durch die horizontale Koordinate E und um die vertikale Koordinate F definiert. Aus diesen Kenngrößen und den entsprechenden Kenngrößen des Kugelfräsers 10 kann die Verschiebung der Stützpunkte vorgenommen werden.

Nach dem erfindungsgemäßen Verfahren werden demnach in einem ersten Schritt unter Verwendung eines Kugelfräsers, dessen Radius r_{K} des Werkzeugkopfs dem Radius r_{S} des Werkzeugschafts entspricht, erste Fräsbahnen erzeugt. Diese ersten Fräsbahnen dienen als Hilfsfräsbahnen. Im Sinne der Erfindung soll nämlich nicht ein Kugelfräser eingesetzt werden, sondern vielmehr ein erfindungsgemäßes Fräswerkzeug, dessen Radius R_{K} des Fräserkopfs größer ist als der Radius R_{S} des Fräserschafts, ohne dass jedoch der Werkzeugkopf seitlich über eine äußere Mantelfläche des Werkzeugschafts vorsteht. Es ist selbstverständlich, dass die Hilfsfräsbahnen unter Verwendung eines Kugelfräser erzeugt werden, dessen Radius r_{S} des Fräserschafts dem Radius R_{S} des Fräserschafts des tatsächlich zu verwendenden erfindungsgemäßen Werkzeugs entspricht. Aus diesen Hilfsfräsbahnen werden dann die tatsächlichen Fräsbahnen für das erfindungsgemäße Fräswerkzeug generiert. Dies erfolgt dadurch, dass die Stützpunkte der Hilfsfräsbahnen in Richtung der Normalenvektoren der zu fräsenden Werkstückoberfläche verschoben werden. Die Verschiebung erfolgt unter Berücksichtigung des Radiuses r_{S} bzw. des Durchmessers d_{S} des Werkzeugschafts des Kugelfräsers, wobei diese Parameter dem Radius R_{S} bzw. dem Durchmesser D_{S} des Werkzeugschafts des zu verwendenden Fräswerkzeugs entsprechen. Weiterhin erfolgt die Verschiebung der Stützpunkte unter Verwendung des Radiuses R_{K} des Werkzeugkopfs des Fräswerkzeugs und unter Verwendung der Radiusmittelpunkte der Werkzeugköpfe von Kugelfräser und tatsächlich zu verwendenden Fräswerkzeug. Durch eine einfache Differenzbildung der korrespondierenden geometrischen Parameter kann der Betrag der Verschiebung der Stützpunkte bestimmt werden.

Mithilfe der Erfindung ist es erstmals möglich, bei der Fräsbearbeitung komplexer Freiformflächen an Blisks Fräswerkzeuge einzusetzen, deren Werkzeugköpfe einen größeren Radius aufweisen als der Werkzeugschaft des Fräswerkzeugs. Hierdurch kann insgesamt ein größerer Zeilenabstand bei der Fräsbearbeitung eingestellt werden. Die zum Fräsen benötigte Zeit wird verringert. Die Effektivität der Fräsbearbeitung wird gesteigert.

## Patentansprüche

1. Verfahren zum Fräsen von Freiformflächen an Werkstücken, insbesondere zum 5-Achsfräsen, wobei ein Werkstück von einem Fräswerkzeug (15) mit einem zu einer Symmetrieachse rotationssymmetrischen, einen im Querschnitt einen Radius aufweisenden Werkzeugschaft (16) und einem ein Seitenbereich und ein Werkzeugende aufweisenden Werkzeugkopf (17) derart gefräst wird, dass sich eine gewünschte Freiformfläche ergibt, und wobei das Fräswerkzeug (15) zum Fräsen entlang mindestens einer definierten Fräsbahn relativ zum Werkstück bewegt wird
wobei ein Fräswerkzeug (15) eingesetzt wird, bei dem der Radius des Seitenbereichs des Werkzeugkopfes im Längsschnitt in jedem Punkt größer ist als der Radius des Werkzeugschafts, ohne dass der Werkzeugkopf (17) seitlich über eine äußere Mantelfläche des Werkzeugschafts (16) vorsteht, und bei dem das Werkzeugende eine zur Symmetrieachse im Wesentlichen senkrechte Fläche ausbildet
**dadurch gekennzeichnet, dass** unter Verwendung eines Kugelfräsers (10), dessen Radius des Werkzeugkopfs dem Radius des Werkzeugschafts entspricht, erste Fräsbahnen bzw. Hilfsfräsbahnen erzeugt werden, und dass aus diesen ersten Fräsbahnen bzw. Hilfsfräsbahnen zweite Fräsbahnen für das Fräswerkzeug (15) generiert werden.

2. Verfahren nach Anspruch 1, **dadurch gekennzeichnet, dass** jede der ersten Fräsbahnen aus einer Vielzahl von Stützpunkten besteht.

3. Verfahren nach Anspruch 1 oder 2, **dadurch gekennzeichnet, dass** Normalenvektoren der zu fräsenden Werkstückoberfläche erzeugt werden, wobei für jeden Stützpunkt der ersten Fräsbahnen bzw. Hilfsfräsbahnen ein korrespondierender Normalenvektor erzeugt wird.

4. Verfahren nach einem oder mehreren der Ansprüche 1 bis 3, **dadurch gekennzeichnet, dass** zur Generierung der zweiten Fräsbahnen für das zu verwendende
Fräswerkzeug (15) die Stützpunkte der ersten Fräsbahnen relativ zu den korrespondierenden Normalenvektoren verschoben werden.

5. Verfahren nach Anspruch 4, **dadurch gekennzeichnet, dass** die Stützpunkte um die Differenz aus dem Radius des Werkzeugkopfs des Kugelfräsers (10) und dem Radius des Werkzeugkopfs des zu verwendenden Fräswerkzeugs (15) verschoben werden.

6. Verfahren nach einem oder mehreren der Ansprüche 1 bis 5, **dadurch gekennzeichnet, dass** der Radius sowie ein Radiusmittelpunkt des Werkzeugkopfs des Kugelfräsers (10) und der Radius sowie ein Radiusmittelpunkt des Werkzeugkopfs des Fräswerkzeugs (15) in einem Werkzeugkoordinatensystem definiert werden, wobei der Ursprung des Werkzeugkoordinatensystems ein Werkzeugbezugspunkt ist, in welchem sich eine Achse des Fräswerkzeugs mit einem Ende des Werkzeugkopfs schneidet.

7. Verfahren nach Anspruch 6, **dadurch gekennzeichnet, dass** zur Generierung der zweiten Fräsbahnen für das Fräswerkzeug (15) die Stützpunkte um die Differenz aus dem Radius des Kugelfräsers (10) und dem Radius des zu verwendenden Fräswerkzeugs (15) unter Verwendung der Koordinaten der entsprechenden Radiusmittelpunkte verschoben werden.

8. Verfahren nach einem oder mehreren der Ansprüche 1 bis 7, **dadurch gekennzeichnet,**
**dass** der Radius des Seitenbereichs des Werkzeugkopfs (17) im Längsschnitt doppelt so groß ist wie der Radius des Werkzeugschafts (16), jedoch kleiner als ein kleinster Krümmungsradius der zu fräsenden Freiformfläche.

## Claims

1. Method for milling free-form surfaces on workpieces, in particular for five-axis milling, wherein a workpiece is milled by a milling tool (15), with a tool shank (16) that is rotationally symmetrical with respect to an axis of symmetry and has in cross section a radius and with a tool head (17) that has a side region and a tool end, in such a way that a desired free-form surface results, and wherein the milling tool (15) is moved for milling along at least one defined milling track relative to the workpiece, wherein a milling tool (15) is used in which the radius of the side region of the tool head in longitudinal section at each point is greater than the radius of the tool shank, without the tool head (17) protruding laterally over an outer lateral surface of the tool shank (16), and in which the tool end forms an area that is substantially perpendicular to the axis of symmetry, **characterised in that** first milling tracks or auxiliary milling tracks are produced with the use of a spherical milling cutter (10), the radius of the tool head of which corresponds to the radius of the tool shank, and **in that** second milling tracks for the milling tool (15) are generated from these first milling tracks or auxiliary milling tracks.

2. Method according to claim 1, **characterised in that** each of the first milling tracks consists of a plurality of support points.

3. Method according to claim 1 or 2, **characterised in that** normal vectors of the workpiece surface that is to be milled are produced, wherein a corresponding normal vector is produced for each support point of the first milling tracks or auxiliary milling tracks.

4. Method according to one or more of claims 1 to 3, **characterised in that** in order to generate the second milling tracks for the milling tool (15) that is to be used the support points of the first milling tracks are shifted in relation to the corresponding normal vectors.

5. Method according to claim 4, **characterised in that** the support points are shifted by the difference between the radius of the tool head of the spherical milling cutter (10) and the radius of the tool head of the milling tool (15) that is to be used.

6. Method according to one or more of claims 1 to 5, **characterised in that** the radius and also a radius central point of the tool head of the spherical milling cutter (10) and the radius and also a radius central point of the tool head of the milling tool (15) are defined in a system of tool co-ordinates, wherein the origin of the system of tool co-ordinates is a tool reference point at which an axis of the milling tool intersects with an end of the tool head.

7. Method according to claim 6, **characterised in that** in order to generate the second milling tracks for the milling tool (15) the support points are shifted by the difference between the radius of the spherical milling cutter (10) and the radius of the milling tool (15) that is to be used, with reference to the co-ordinates of the corresponding radius central points.

8. Method according to one or more of claims 1 to 7, **characterised in that** the radius of the side region of the tool head (17) in longitudinal section is twice as large as the radius of the tool shank (16), yet smaller than a smallest radius of curvature of the free-form surface that is to be milled.

## Revendications

1. Procédé pour fraiser des surfaces à forme libre sur des pièces à usiner, en particulier pour le fraisage à 5 axes, une pièce à usiner étant fraisée par un outil de fraisage (15) avec une tige d'outil (16) présentant un rayon en section transversale, à symétrie de révolution par rapport à un axe de symétrie et une tête d'outil (17) présentant une zone latérale et une extrémité d'outil de telle manière qu'il résulte une surface à forme libre souhaitée et l'outil de fraisage (15) destiné au fraisage étant déplacé le long d'au moins un parcours de fraisage défini de manière relative par rapport à la pièce à usiner, un outil de fraisage (15) étant utilisé, pour lequel le rayon de la zone latérale de la tête d'outil est plus grand en coupe longitudinale dans chaque point que le rayon de la tige d'outil sans que la tête d'outil (17) dépasse latéralement d'une surface enveloppe extérieure de la tige d'outil (16) et pour lequel l'extrémité d'outil réalise une surface essentiellement perpendiculaire à l'axe de symétrie, **caractérisé en ce qu'**en utilisant une fraise sphérique (10), dont le rayon de la tête d'outil correspond au rayon de la tige d'outil, des premiers parcours de fraisage ou parcours de fraisage auxiliaires sont générés et **en ce qu'**à partir de ces premiers parcours de fraisage ou parcours de fraisage auxiliaires sont générés des seconds parcours de fraisage pour l'outil de fraisage (15).

2. Procédé selon la revendication 1, **caractérisé en ce que** chacun des premiers parcours de fraisage se compose d'une pluralité de points d'appui.

3. Procédé selon la revendication 1 ou 2, **caractérisé en ce que** des vecteurs normaux de la surface de pièce à usiner à fraiser sont générés, pour chaque point d'appui des premiers parcours de fraisage ou parcours de fraisage auxiliaires étant généré un vecteur normal correspondant.

4. Procédé selon l'une ou plusieurs quelconques des revendications 1 à 3, **caractérisé en ce que** pour générer les seconds parcours de fraisage pour l'outil de fraisage à utiliser (15), les points d'appui des premiers parcours de fraisage sont déplacés de manière relative par rapport aux vecteurs normaux correspondants.

5. Procédé selon la revendication 4, **caractérisé en ce que** les points d'appui sont déplacés de la différence entre le rayon de la tête d'outil de la fraise sphérique (10) et le rayon de la tête de l'outil de fraisage (15) à utiliser.

6. Procédé selon l'une ou plusieurs quelconques des revendications 1 à 5, **caractérisé en ce que** le rayon ainsi qu'un point central de rayon de la tête d'outil de la fraise sphérique (10) et le rayon ainsi qu'un point central de rayon de la tête de l'outil de fraisage (15) sont définis
dans un système de coordonnées d'outil, l'origine du système de coordonnées d'outil étant un point de référence d'outil, dans lequel un axe de l'outil de fraisage coupe une extrémité de la tête d'outil.

7. Procédé selon la revendication 6, **caractérisé en ce que** pour générer les seconds parcours de fraisage pour l'outil de fraisage (15), les points d'appui sont déplacés de la différence entre le rayon de la fraise sphérique (10) et le rayon de l'outil de fraisage (15) à utiliser en utilisant les coordonnées des points centraux de rayon correspondants.

8. Procédé selon l'une ou plusieurs quelconques des revendications 1 à 7, **caractérisé en ce que** le rayon de la zone latérale de la tête d'outil (17) est deux fois plus grand en coupe longitudinale que le rayon de la tige d'outil (16), toutefois plus petit qu'un rayon de courbure minimal de la surface à forme libre à fraiser.
